Europäisches Patentamt

European Patent Office

Office européen des brevets

(11) Publication number : **0 609 992 A1**

## (12) EUROPEAN PATENT APPLICATION

(21) Application number : **94300325.1**

(22) Date of filing : **17.01.94**

(51) Int. Cl.[5] : **G01V 5/00**

(30) Priority : **02.02.93 GB 9301983**

(43) Date of publication of application :
**10.08.94 Bulletin 94/32**

(84) Designated Contracting States :
**DE FR IT NL**

(71) Applicant : **UNITED KINGDOM ATOMIC ENERGY AUTHORITY**
**Harwell Laboratory**
**Oxfordshire OX11 0RA (GB)**

(72) Inventor : **Ward, Christopher Brian**
**1 Murrell Lane,**
**Stotfold**
**Hitchin, Hertfordshire SG5 4PP (GB)**

(74) Representative : **Lofting, Marcus John et al**
**United Kingdom Atomic Energy Authority**
**Patents Department**
**Building 329**
**Harwell Laboratory**
**Oxfordshire OX11 0RA (GB)**

(54) **Analysis using neutrons.**

(57)   Apparatus for detecting the presence of a target element within an analysis region comprises neutron source(s) and gamma ray detectors. Counts accumulated for each detector are recorded and a best fit concentration profile computed on the basis of a selection of variables fewer in number than the number of gamma ray detectors used.

EP 0 609 992 A1

The invention relates to an apparatus for carrying out analysis using neutrons and in particular to an apparatus for detecting the presence of a target element amongst material within an analysis region. An indication is provided in the event that the concentration of the target element exceeds a predetermined level.

The apparatus finds application in the detection of explosives in luggage in, for example, an airport security system. For this, the analysis region is adapted to receive a container such as luggage, a package or the like.

It is known that explosives generally contain a higher amount of nitrogen than normal objects to be found in luggage. There have been a number of proposals for detecting explosives in luggage by apparatus which subjects the luggage to irradiation with neutrons and detects the emitted gamma rays which are characteristic of those emitted by nitrogen atoms which capture neutrons.

In, for example, GB 1 392 169 and GB 2 217 009, an imaging approach is adopted in which the configuration of neutron sources and detectors of gamma rays together with the output signal processing equipment are set up to provide an indication of the spacial profile of nitrogen concentration within the item of luggage under examination. Relatively small regions exhibiting high nitrogen concentration are indicative of the presence of explosive within the luggage.

The problem with this approach is that, to secure the necessary resolution for the imaging, a large number of detectors, a number of sources and/or long counting times are required. There are possibilities for trade-offs between these requirements. Thus it is possible to compensate to some extent for a reduced number of detectors by increasing the counting times or to compensate for a reduced number of sources by increasing the number of detectors or the counting time, and so on. There are obviously practical limits and the pressure, particularly for airport security systems, is for the counting time to be as short as possible whilst the number of sources and detectors needs to be kept to a minimum to reduce cost and, so far as sources are concerned, to minimise the radiation screening requirements.

These problems are exacerbated by the difficulty in using detection of nitrogen for indicating the presence of explosive which arises because certain standard items in luggage such as clothing, may have nitrogen contents which are not significantly less than the nitrogen content of the explosive.

GB patent specification 2 235 766 describes an approach to these problems based upon an optimum source-detector distance and a symmetry in the source/detector array which enables meaningful results to be derived from the total sum of accumulated counts from all of the detectors.

With that arrangement, however, we have found that it remains difficult to reconcile the conflicting requirements of a reasonably low false alarm rate with a low rate of failure to detect presence of explosive.

Our patent specification number (Agents Ref: 14927 LgH) having the same filing date as the present application describes a configuration of sources and detectors, and a method of configuring the source/detector array, which makes possible an improvement in the resolution of these conflicting requirements.

The present invention is based upon the appreciation that further improvements towards the same objective can be achieved by providing in the apparatus analysis means for a particular form of processing of the counts of detected gamma rays.

The invention provides apparatus for detecting the presence of a target element amongst materials within an analysis region and for providing an indication in the event that the concentration of said element exceeds a pre-determined level, the element being such as produces a characteristic gamma ray when irradiated with neutrons, which apparatus comprises an array of at least one source of neutrons and a plurality of gamma ray detectors positioned so that material in the analysis region is subjected to irradiation with neutrons and the detectors receive resultant gamma rays, analysis means comprising means for accumulating counts at each detector respectively of detected gamma rays having an energy corresponding to that characteristic of the said element, processing means for automatically processing the set of accumulated counts from each detector to calculate a concentration profile of the element across a plurality of volume cells into which the analysis region is notionally divided, which concentration profile is a best fit for the accumulated count data, the calculation being constrained to allow variation in a selection from the large number of variables required to define the location and element concentration level for each volume cell, which selection comprises a number of variables less than the total number of detectors, and means, such as a display, an alarm, an indicator or a security mechanism, responsive to one or more features of the best fit profile thus calculated.

With this approach, it is possible notionally to divide the analysis region into a plurality of volume cells the number of which is greater, or very substantially greater, than the number of detectors. The size of the volume cell is conveniently chosen to correspond with the typical size of object containing the target element which it is desired to detect.

When searching for a bomb in luggage, for example, the size of the volume cell is chosen to match the typical size expected for such a bomb.

We have found that effective results are achieved with an apparatus having twelve detectors if the selection of variables is based upon an assumed average concentration level in all but one volume cell, so that there are three variables for the best fit calculation, namely,

1) the location of the said one volume cell;

2) the element concentration level therein, and

3) the magnitude of assumed average concentration level in all the other volume cells.

It will be appreciated, however, that other selections may be chosen. For example, an apparatus having twelve detectors would support a calculation involving more than three variables. The difficulties mount as the number of variables is increased. It would be practicable for example for the calculation to search for a best fit in which there are five variables so as to allow for the magnitude (3) of the assumed average element concentration level in all the other volume cells to be split into two. For this, the two volume cell groups would have to be pre-defined, such as comprising the left half and right half of the analysis region.

To provide for still further refinement of the analysis if required, said analysis means comprises further automatic processing means for comparing the accumulated count for each detector with a mean count predetermined by a calibration for that detector in a large sample of normal luggage, and for identifying the detector for which the deviation from the said mean count of the said accumulated count most exceeds the standard deviation for that detector derived from the calibration measurements in the sample of normal luggage.

According to a further aspect of the present invention, operator controlled means is provided for pre-selecting a specific volume cell within the analysis region and for causing the said processing means to compute the concentration level within the pre-selected volume cell which, together with a calculated average concentration level in all other volume cells, is a best fit for the accumulated count data.

Where the analysis is to be applied to a container such as luggage, a package or the like, the analysis region is adapted to receive such container.

Preferably, the apparatus is combined with a conventional X-ray apparatus for providing an X-ray image of the container under examination. Conveniently this is carried out at a closely positioned location and the container moved from the X-ray apparatus to the neutron interrogation apparatus. The operator controlling the latter is provided at his console with a display of the X-ray image which he can use, if desired, to provide to the neutron interrogation apparatus the required input for pre-selecting a specific volume cell identified from the X-ray image as being suspicious.

A specific construction of apparatus embodying the invention will now be described by way of example and with reference to the drawings filed herewith in which:-

Figure 1 is a sectional plan view of an analysis region of an apparatus for examination of suitcases,

Figure 2 is a sectional end view of the analysis region,

Figure 3 is a sectional side view of the analysis region,

Figure 4 shows diagrammatically a notional division into volume cells of the analysis region of the apparatus of Figures 1 to 3,

Figure 5 is similar to Figure 4 but shows the region occupied by a standard size suitcase, and

Figure 6 is a diagrammatic representation in block form of signal processing and display components.

The principle on which the apparatus operates using thermal neutrons and the detection of 10.83 MeV nitrogen gamma rays arising from the $^{14}N(n,\gamma)$ reaction is known and described, for example, in GB 2 235 766. The drawings filed herewith and the following description have therefore been limited to the essential parts of the apparatus which are key to understanding and putting into effect the present invention.

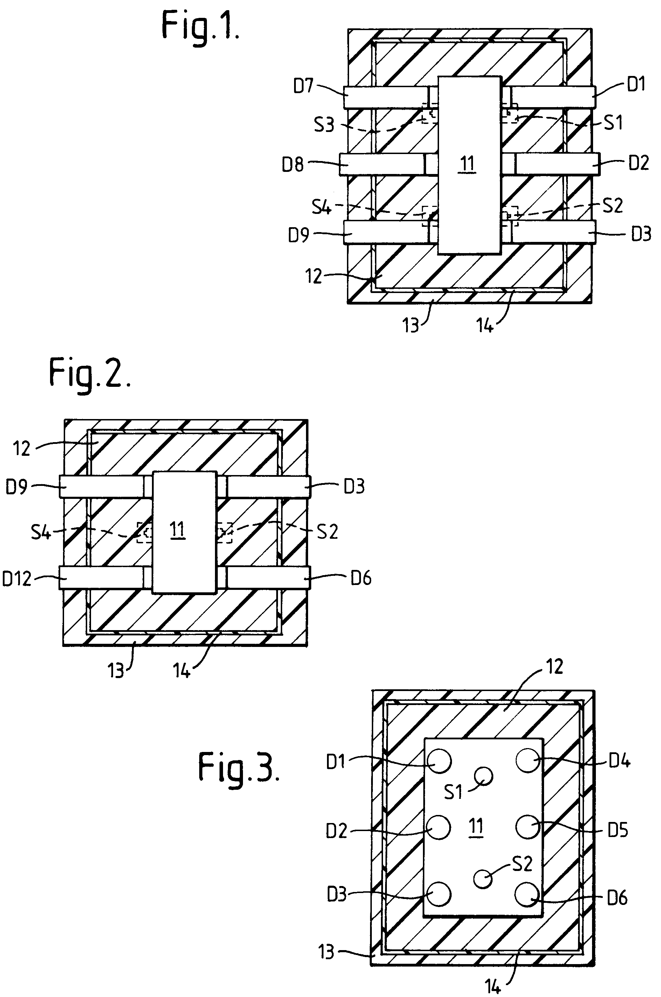

Referring to Figures 1 to 3, the analysis region is provided by a detection cavity 11 on each side of which is an array of $^{252}$Cf neutron sources S1, S2, S3, S4 and sodium iodide gamma ray scintillation detectors D1, D2, D3, D4, D5, D6, D7, D8, D9, D10, D11, D12. Detectors D10 and D11 are not visible in Figures 1 to 3, being obscured by other detectors. The cavity is surrounded by graphite or low density polythene 12, which acts as a moderator and assists to some extent in the processes by which fast neutrons emitted by the source are thermalised and become available within the cavity 11 for capture reactions. Cylindrical recesses within the graphite or low density polythene 12 are provided to receive the sources S1..S4 and detectors D1..D12. The recesses containing the sources are lined with a cylindrical lead cap to shield the detectors from gamma rays emitted by the source. The recesses for the detectors are lined with boron sheet to limit the direct passage of neutrons from the sources into the detectors in which reactions may otherwise occur and interfere with the desired detection of gamma rays emanating from the cavity 11.

An outer layer of biological shielding is provided by boron loaded polythene internally lined with a layer of low density polythene, referenced respectively 13 and 14.

The significance and characteristics of the source/detector arrays as shown are discussed in more detail in our co-pending application No. (Agents Ref: 14927 LgH) filed on the same day as the present application.

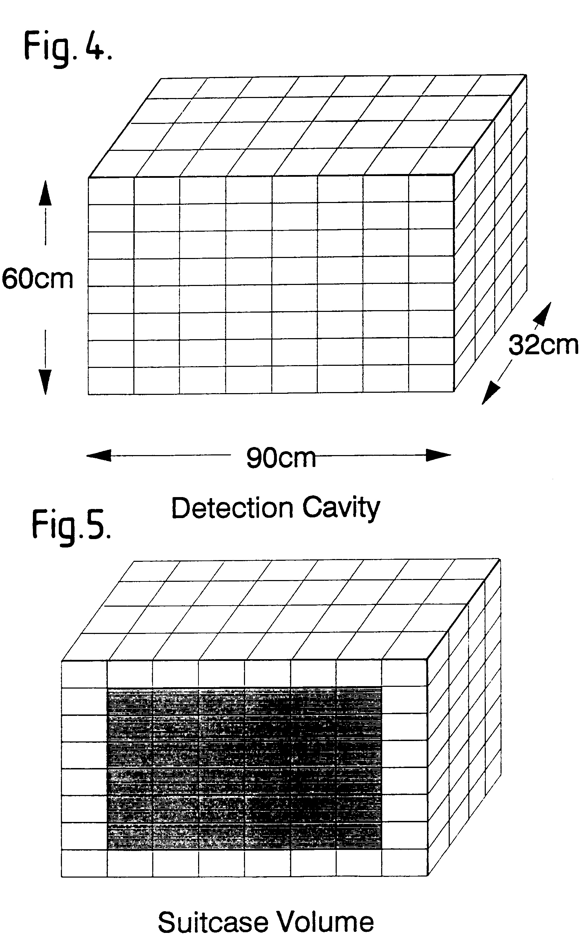

Figure 4 illustrates how the detection cavity which, in this example, has dimensions 90 cm x 60 cm x 32 cm, is notionally divided into 256 volume cells forming an 8 x 8 x 4 array. Figure 5 shows by shading the region of 6 x 6 x 4 of these cells occupied by a typical standard suitcase.

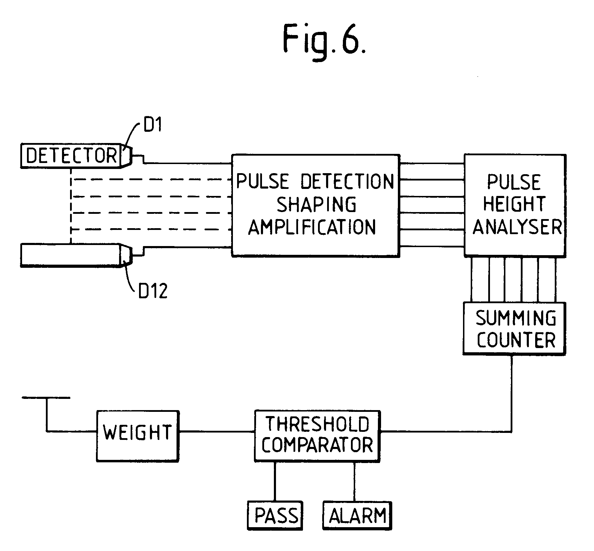

As illustrated in Figure 6, signals from the detectors D1...D12 are detected and processed in a conventional manner and counts accumulated for each detector for events corresponding to nitrogen gamma rays. Position sensors provide an indication of the size and location of luggage positioned in the cavity 11. The detector/count data and position data are fed to a computer in which analysis is performed as described below and an appropriate operator display generated.

Our co-pending application No. (Agents Reference 14927 LgH) describes how the apparatus is well adapted for operation with the simplest form of analysis in which the sum of counts from all 12 detectors is used as the measurement value. The method requires neither correction for background in the detectors nor information about the position and dimensions of the suitcase. The method is robust and relatively insensitive to reductions in counting period. However, the total count method is limited by the inability to distinguish between a small region of high nitrogen density (as in an explosive) and a large region of lower nitrogen density (as may be present in clothing).

To overcome this limitation, data from the detectors, coupled with information which identifies the location and dimensions of the suitcase under examination, are analysed in a way which provides a degree of "nitrogen imaging" whilst avoiding the need to invoke the highly complex procedures and equipment required for conventional image analysis. In particular, it is possible to produce an approximated image at an apparent resolution corresponding to notional division of the suitcase into a number of volume cells which very substantially exceeds the number of detectors. In this example there are 256 volume cells and 12 detectors, the volume cell dimensions being chosen to correspond to the anticipated dimensions of a typical bomb.

In accordance with this method, the assumption is made that there is a fixed, relatively low, level of nitrogen concentration in all of the notional volume cells within the suitcase except one in which it is assumed there is a higher level of nitrogen concentration due to the presence of explosive material in that volume cell.

On the basis of these assumptions, the count in any one of the detectors will be the sum of the counts expected at that detector due to a uniform nitrogen concentration level in each volume cell together with the background and the count due to the one volume cell containing the higher concentration level of nitrogen. This model has three variables namely the uniform concentration level of nitrogen, the concentration level of nitrogen in the volume cell containing explosive and the location of the latter volume cell.

The analytical approach is to discover values for these three unknowns which best fit the matrix of detector/count information provided by the apparatus. Having reduced the analysis to this form, it is a relatively straightforward and conventional matter to programme the computer to discover the best fit solution. The requirement is to find values of the three unknowns which result in a minimum in the sum for all detectors of the difference between the measured detector count and the count predicted for that detector by the selected values of the three unknowns in the model. Expressed mathematically, the objective is to minimise V where

$$V = \sum_j (D_j^{measured} - D_j^{model})^2$$

The approach is to programme the computer to execute a standard least squares fit for the two nitrogen concentration unknowns for each volume cell location. The best fit is then chosen by selecting the location of volume cell which minimises V subject to this corresponding with a positive value of nitrogen concentration in the volume cell suspected of containing explosive.

It will be appreciated that, in using this method, a cell will be identified as containing an excess nitrogen concentration level even although the suitcase does not contain any explosive. This is because the assumption of uniform distribution of nitrogen is not an accurate representation of a normal suitcase. However, if explosive is present, this analytical approach will generate a larger distinction between a suitcase containing explosive from one which does not than the total count approach. A threshold level can thus be set for triggering alarm and the alarm trigger displayed to the operator can include an indication of the volume cell within the suitcase where the explosive is suspected.

This analytical approach thus provides a significant advance on the total count approach, but has the additional advantage that it is capable of providing a very significant advance in detection efficiency if the system is combined with an X-ray detection system.

Arrangements for providing more than one type of analysis of luggage have been described as, for example, in GB 2 217 009. However, the approach there was to use the neutron analysis equipment for a preliminary screen and to pass on to X-ray analysis those items of luggage which appeared suspect from the neutron analysis.

If this approach is reversed and an X-ray image taken first, then an operator may determine from the X-ray image that a particular region of the suitcase is suspect. The operator can input information as to the location of this volume cell to the computer, whereupon it is possible to carry out the least squares fit for only two variables, the location of the volume cell now being fixed. As a consequence, the estimate from the analysis of the level of nitrogen concentration in the suspect volume cell, if explosive is present in that cell, will be much more accurate so that detection limits are very significantly improved.

Where it is not possible or practicable to provide operator information as to the location of a suspect volume cell, a further analysis technique may be employed as an adjunct to that described above.

This further analysis technique, referred to as the most anomalous detector technique, relies upon the fact that explosive near a detector is likely to give a much more anomalous reading for that detector than for the other detectors.

For this approach, the computer is programmed to calculate the difference between the count in each detector from the average over all detectors and indicate the maximum value of this difference. However, in order to provide a sensible threshold for triggering an alarm, it is necessary to refine the approach somewhat and provide a calibration. Accordingly, data from a large set of examinations of "normal" luggage containing no explosive is used to derive a mean detector count $D_j^{mean}$ for each detector, together with the corresponding standard deviations $\sigma_j^D$. The computer is then programmed to derive a value A where

$$A = \max\left(\frac{D_j^{measured} - D_j^{means}}{\sigma_j^D}\right) j = 1 \ldots 12$$

Once again, with this form of analysis, the results are very sensitive to changes in source size and counting times. Corrections also have to be applied for suitcase position and dimensions.

The invention is not restricted to the details of the foregoing examples. Thus, in the example the best fit calculation is based upon three variables. With twelve detectors it is possible to allow for more variables, in theory up to any number less than twelve, in practice, the number of variables allowed in the best fit calculation should be less than about one-half, preferably one-quarter of the number of detectors.

Reference is made to the use of low density polythene for moderation and biological shielding purposes. High density polythene can be used instead, and with advantage, provided care is taken to ensure that the material used does not contain excessive voids.

Whilst apparatus for detecting nitrogen concentration is described for checking luggage for presence of explosive material, it will be appreciated that the apparatus is adaptable for other applications, such as sorting material streams, e.g. ores, where there is a requirement to identify the location of a component or region having a concentration of the target element above a pre-determined limit.

## Claims

1. Apparatus for detecting the presence of a target element amongst materials within an analysis region (11) and for providing an indication in the event that the concentration of said element exceeds a pre-determined level, the element being such as produces a characteristic gamma ray when irradiated with neutrons, which apparatus comprises an array of at least one source of neutrons (S1, S2, S3, S4) and a plurality of gamma ray detectors (D1, D2, D3, D4, D5, D6, D7, D8, D9, D10, D11, D11, D12) positioned so that material in the analysis region (11) is subjected to irradiation with neutrons and the detectors (D1, D2, D3, D4, D5, D6, D7, D8, D9, D10, D11, D12) receive resultant gamma rays, analysis means comprising means for accumulating counts at each detector respectively of detected gamma rays having an energy corresponding to that characteristic of the said element, characterised by processing means for automatically processing the set of accumulated counts from each detector (D1, D2, D3, D4, D5, D6, D7, D8, D9, D10, D11, D12) to calculate a concentration profile of the element across a plurality of volume cells into which the analysis region (11) is notionally divided, which concentration profile is a best fit for the accumulated count data, the calculation being constrained to allow variation in a selection from the large number of variables required to define the location and element concentration level for each volume cell, which selection comprises a number of variables less than the total number of detectors, and means, such as a display, an alarm, an indicator or a security mechanism, responsive to one or more features of the best fit profile thus calculated.

2. Apparatus as claimed in Claim 1, further characterised in that the said processing means is arranged notionally to divide the analysis region into a plurality of volume cells the number of which is greater than the number of detectors.

3. Apparatus as claimed in Claim 2, further characterised in that the said number is such that the size of each volume cell corresponds with the size of object containing the target element which it is desired to detect.

4. Apparatus as claimed in Claim 3 for searching for a bomb in luggage, further characterised in that the said number is such that the size of the volume cell corresponds to the typical size expected for a bomb concealed in luggage.

5. Apparatus as claimed in any of the preceding claims further characterised in that the said selection comprises a number of variables less than half the total number of detectors.

6. Apparatus as claimed in Claim 5 in which there are more than six detectors and characterised in that the selection of variables is based upon an assumed average concentration level in all but one volume cell, so that there are three variables for the best fit calculation comprising respectively the location of the said one volume cell, the element concentration level therein, and the magnitude of assumed average concentration level in all the other volume cells.

7. Apparatus as claimed in Claim 6 in which there are twelve or more detectors.

8. Apparatus as claimed in any one of the preceding Claims, further characterised in that said analysis means comprises further automatic processing means for comparing the accumulated count for each detector (D1, D2, D3, D4, D5, D6, D7, D8, D9, D10, D11, D12) with a mean count pre-determined by a calibration for that detector (D1, D2, D3, D4, D5, D6, D7, D8, D9, D10, D11, D12) in a large sample of normal luggage, and for identifying the detector (D1, D2, D3, D4, D5, D6, D7, D8, D9, D10, D11, D12) for which the deviation from the said mean count of the said accumulated count most exceeds the standard deviation for that detector (D1, D2, D3, D4, D5, D6, D7, D8, D9, D10, D11, D12) derived from the calibration measurements in the sample of normal luggage.

9. Apparatus as claimed in any one of the preceding Claims, further characterised in that operator controlled means is provided for pre-selecting a specific volume cell within the analysis region (11) and for causing the said processing means to compute the concentration level within the pre-selected volume cell which, together with a calculated average concentration level in all other volume cells, is a best fit for the accumulated count data.

10. Apparatus as claimed in any one of the preceding Claims combined with a conventional X-ray apparatus for providing an X-ray image of an article under examination.

11. Apparatus as claimed in Claim 10, further characterised in that a display console is positioned and connected so as to provide an operator with an X-ray image which he can use when controlling the analysis means of the neutron interrogation apparatus.

Fig.1.

D7
S3
D8
S4
D9
11
12
13
14
D1
S1
D2
S2
D3

Fig.2.

12
D9
S4
11
D12
13
14
D3
S2
D6

Fig.3.

D1
S1
D2
11
D3
S2
12
D4
D5
D6
13
14

## Fig.4.

60cm

32cm

90cm

Detection Cavity

## Fig.5.

Suitcase Volume

# Fig.6.

**European Patent Office**

## EUROPEAN SEARCH REPORT

Application Number

EP 94 30 0325

### DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y | WO-A-91 14938 (MARTIN MARIETTA ENERGY SYSTEMS)<br>* abstract *<br>* page 3, line 13 - page 6, line 8 *<br>* page 14, line 6 - page 16, line 13 *<br>--- | 1-11 | G01V5/00 |
| Y | EP-A-0 459 648 (GAMMA-METRICS)<br>* abstract *<br>* column 1, line 50 - column 2, line 22 *<br>* column 2, line 26 - line 48 *<br>* column 3, line 7 - column 4, line 39 *<br>* column 4, line 56 - column 9, line 48 *<br>* figures *<br>--- | 1-11 | |
| A | WO-A-92 12415 (GENERAL RESEARCH CORPORATION)<br>* page 7, line 9 - line 25 *<br>* page 10, line 25 - page 11, line 25 *<br>* page 31, line 20 - page 33, line 23 *<br>* figures *<br>--- | 1-9 | |
| A | CONFERENCE RECORD OF THE 1991 IEEE PARTICLE ACCELERATOR CONFERENCE,<br>vol.4 OF 5, 6 May 1991, SAN FRANCISCO, CALIFORNIA<br>pages 2622 - 2624<br>HABIGER, K W ET AL. 'exdep/ctx an explosive detection system for screening luggage with high energy x-rays'<br>* the entire document*<br>----- | 1-11 | TECHNICAL FIELDS SEARCHED (Int.Cl.5)<br><br>G01V |

The present search report has been drawn up for all claims

| Place of search | Date of completion of the search | Examiner |
|---|---|---|
| THE HAGUE | 2 May 1994 | Datta, S |

EPO FORM 1503 03.82 (P04C01)